# EUROPÄISCHE PATENTSCHRIFT

(11) **EP 1 152 199 B1**
(45) Veröffentlichungstag und Bekanntmachung des Hinweises auf die Patenterteilung: **27.07.2005**
(21) Anmeldenummer: 01109525.4
(22) Anmeldetag: 17.04.2001
(51) Int. Cl.: F25D 11/00, F25B 21/02, A45C 5/14, B62B 1/12, A45C 11/20, F25D 23/06, B65D 85/68

(54) **Thermobehälter**
Thermal container
Conteneur thermique

(30) Priorität: 03.05.2000 DE 20007909 U; 03.11.2000 DE 20018873 U
(43) Veröffentlichungstag der Anmeldung: 07.11.2001
(73) Patentinhaber: IPV Inheidener Produktions- und Vertriebsgesellschaft mbH, 35410 Hungen-Inheiden (DE)
(72) Erfinder: Zorn, Manfred, 35410 Hungen-Inheiden (DE)
(74) Vertreter: Heim, Hans-Karl, Dipl.-Ing.

(56) Entgegenhaltungen:
- EP-A- 0 085 534
- WO-A-96/07063
- DE-U- 9 012 414
- DE-U- 29 614 114
- GB-A- 2 155 168
- US-A- 5 249 438
- US-A- 5 301 508
- US-A- 5 472 279
- US-A- 5 501 076
- US-A- 5 865 032

## Beschreibung

Die Erfindung betrifft einen Thermobehälter, insbesondere eine Kühltasche für Kühltransporte von Nahrungsmitteln, Stoffen und/oder Gegenständen, nach dem Oberbegriff von Anspruch 1.

Ein gattungsgemäßer Thermobehälter weist eine Hülle auf, welche einen Transportraum umgibt, wobei zum Zugriff auf den Transportraum in der Hülle eine verschließbare Öffnung vorgesehen ist. Weiterhin ist eine manuell betätigbare Fahreinrichtung vorgesehen, die mit der Hülle gekoppelt ist.

Ein gattungsgemäßer Thermobehälter ist aus US-5,249,438 bekannt und kann beispielsweise als Kühlbox im Freizeitbereich oder zum Transport für tiefgefrorene Lebensmittel eingesetzt werden.

Mit derartigen Taschen kann ein Erwärmen von eingelegten gekühlten Waren oder Nahrungsmitteln verzögert werden. Unter Verwendung von passiven Kühlelementen kann außerdem der Transportraum vorgekühlt und so, nach Einlegen der Nahrungsmittel in den vorgekühlten Transportraum, auch eine Abkühlung erzielt werden.

Solche Thermobehältnisse werden insbesondere als Kühlbehältnis zur Kühlung von Lebensmitteln, beispielsweise von Reiseproviant verwendet. Ein Einsatz solcher Thermobehältnisse ist aber auch im medizinischen oder klinischen Bereich möglich, etwa zur Kühlung von Medikamenten oder von Blutprodukten.

Die passiven Kühlelemente bestehen dabei aus Materialien mit großer Wärmekapazität und/oder großer Übergangs- oder latenter Wärme für einen Fest-Flüssig-Phasenübergang. Nach einer gewissen Zeit gleicht sich die Temperatur der passiven Kühlelemente der Umgebungstemperatur an, so dass ihr Kühlpotential erschöpft ist und sie erst wieder, etwa im Gefrierfach eines Kühlschranks, abgekühlt werden müssen. Für den Fall, dass solch eine Abkühlmöglichkeit nicht zur Verfügung steht, erweist sich die Verwendung derartiger passiver Kühlelemente als nachteilig, da sie nach Erwärmung auf Raumtemperatur nur noch nutzlosen Ballast darstellen.

Aus der DE 197 28 539 A1 sind aktive Kühleinrichtungen bekannt, bei denen ein Volumen beispielsweise durch Peltier-Elemente, d.h. durch elektrischen Strom, abgekühlt wird. Diese Kühlelemente sind allerdings nicht zusammen mit den bekannten Thermobehältern einsetzbar, da bei diesen keine Möglichkeit besteht, die dem Transportvolumen entzogene Wärme nach außen abzuführen.

Ausserdem ist bei der aus der DE 197 28 539 A1 bekannten Kühltasche eine flexible faltbare Hülle vorgesehen, so dass das Volumen der Tasche an die jeweils vorliegenden Bedürfnisse angepasst werden kann. Diese bekannte Kühltasche kann zum manuellen Gebrauch allerdings nur mit einem relativ kleinen Transportraum ausgelegt werden. Selbst bei vergleichsweise geringer Größe und entsprechend geringem Gewicht der Kühltasche ist ein manueller Transport derselben, insbesondere wenn längere Strecken zurückgelegt werden sollen, sehr anstrengend und ermüdend.

Kühlbehältnisse, bei denen zum Kühlen eines Transportraums thermoelektrische Aggregate eingesetzt werden, sind außerdem aus den Druckschriften US-5,865,032, US-5,501,076, WO 96/07063, US-5,301,508 sowie DE 296 14 114 U1 bekannt.

Eine faltbare, wärmeisolierende Tasche ist in US-5,472,279 beschrieben.

**Aufgabe** der vorliegenden Erfindung ist es, einen Thermobehälter zu schaffen, bei welchem auch sehr lange Kühldauern möglich sind und bei dem das zu kühlende Volumen des Transportraums an die jeweils vorliegende Situation anpassbar ist.

Die Lösung dieser Aufgabe gelingt durch den Thermobehälter mit den Merkmalen nach Anspruch 1. Zweckmäßige Ausgestaltungen der Erfindung sind in den Unteransprüchen angegeben.

Ein Thermobehälter ist erfindungsgemäß dadurch weitergebildet, dass in der Hülle mindestens ein Durchbruch für die Aufnahme einer Wärmetauscheinrichtung einer aktiven Kühleinrichtung ausgebildet ist, dass mindestens eine aktive Kühleinrichtung vorgesehen ist mit einem aktiven Kühlelement und einer Wärmetauscheinrichtung , die in dem Durchbruch aufgenommen ist, und dass die Hülle zur Anpassung des Volumens des Transportraums aus einem flexiblen, insbesondere aus einem faltbaren, Material gefertigt ist.

Ein erster Grundgedanke der Erfindung kann darin gesehen werden, dass ein Thermobehälter mit einem Durchbruch oder einer Aussparung zur Aufnahme einer Wärmetauscheinrichtung einer aktiven Kühleinrichtung versehen wird. Dadurch kann die dem zu kühlenden Transportraum durch ein eingesetztes Kühlelement entnommene Wärme nach außen abgeführt werden. Es können damit die Vorteile einer aktiven Kühlung nutzbar gemacht werden. Beispielsweise kann durch die Verwendung einer aktiven Kühleinrichtung eine Kühlung zu jedem gewünschten Zeitpunkt erfolgen. Weiterhin zeichnen sich die erfindungsgemäßen Thermobehälter durch besonders einfache und kostengünstige Herstellbarkeit aus. So kann der Durchbruch z.B. durch einfaches Stanzen oder Schneiden in einen herkömmlichen Behälter eingearbeitet werden.

Erfindungsgemäß ist in den Transportraum mindestens eine aktive Kühleinrichtung mit einem aktiven Kühlelement und einer Wärmetauscheinrichtung aufgenommen. Dabei wird erfindungsgemäß die Wärmetauscheinrichtung der Kühleinrichtung, die beispielsweise in Form von Kühlrippen ausgebildet sein kann, in dem Durchbruch angeordnet und ragt nach außen durch. Auf diese Weise wird eine Wärmeableitung von innen nach außen ermöglicht. Das Kühlelement der Kühleinrichtung kann ein thermoelektrisches Kühlaggregat oder -element, insbesondere ein Peltier-Element, sein.

Ein weiterer Grundgedanke der Erfindung kann darin gesehen werden, die Hülle aus einem flexiblen, insbesondere aus einem faltbaren, Material auszubilden. Das zu kühlende Volumen des Transportraums kann dann spezifisch an die jeweilige Situation angepasst werden und es kann in erheblichem Umfang Energie eingespart werden. Diesem Gesichtpunkt kommt erhebliche Bedeutung zu, wenn das aktive Kühlelement netzunabhängig von Batterien, insbesondere von Akkumulatoren, versorgt wird.

Vorteilhaft ist dabei, wenn die Kühleinrichtung eine Tasche zur Aufnahme von Nahrungsmitteln, Stoffen und/oder Gegenständen aufweist. Die Tasche, die zweckmäßig mit einer verschließbaren Öffnung versehen ist, kann auch als Innenhülle oder Innentasche, die Hülle entsprechend auch als Außenhülle oder Außentasche bezeichnet werden.

Die Hülle kann prinzipiell fest mit der manuell betätigbaren Fahreinrichtung verbunden sein, ist aber bei einer bevorzugten Ausführungsform lösbar mit der Fahreinrichtung gekoppelt.

Die lösbare Variante weist den zusätzlichen Vorteil auf, dass die Fahreinrichtung nur wenn sie tatsächlich benötigt wird, d.h. wenn das Thermobehältnis von Hand über eine gewisse Strecke transportiert werden soll, mit der Hülle gekoppelt werden muss. Ist das nicht der Fall, kann die Hülle auch ohne Fahreinrichtung verwendet werden.

Bei einer besonders bevorzugten Ausführungsform der Erfindung ist die Fahreinrichtung als Rolleinrichtung mit mindestens zwei Rollen sowie einer Führungseinrichtung ausgebildet. Dabei kann ein Nutzer die Bewegung des Thermobehältnisses mit Hilfe der Führungseinrichtung kontrollieren.

Die Führungseinrichtung weist zweckmäßig zwei teleskopierbare Führungselemente, insbesondere aus Metall, und einen damit verbundenen Haltegriff auf. Die Teleskopier- oder Heraus- und Einziehbarkeit der Führungselemente, die beispielsweise als Führungsstangen ausgebildet sein können, ermöglicht in vorteilhafter Weise eine raumsparende Unterbringung der Fahr- oder Rolleinrichtung, wenn diese nicht benötigt wird. Insbesondere ist eine Ausführungsform mit zwei Rollen bevorzugt, bei der das Thermobehältnis zum Verfahren mit Hilfe des Haltegriffs und der ausgezogenen Führungsstangen oder Führungselemente zunächst leicht angekippt wird und dann durch Ziehen oder Schieben am Haltegriff verfahren werden kann.

Dabei ist es zweckmäßig, die Massenverteilung an der Rolleinrichtung so zu wählen, dass ein Drehmoment um eine Rollenachse möglichst klein ist, so dass zur Stabilhaltung des rollbaren Kühlbehältnisses vom Nutzer nur sehr geringe Kräfte aufgewendet werden müssen.

Die aktive Kühleinrichtung stellt bereits einen wesentlichen Teil der Gesamtmasse des fahrbaren Kühlbehältnisses dar. Die aktive Kühleinrichtung wird demnach bevorzugt so an der Rolleinrichtung angeordnet, dass sie sich im manuellen Rollbetrieb auf einer einem Schwerpunkt eines Transportguts gegenüberliegenden Seite einer Rollenachse befindet. Auf diese Weise können die von dem Transportgut und der aktiven Kühleinrichtung bewirkten Drehmomente zumindest teilweise gegenseitig ausgeglichen werden.

Besonders zweckmäßig ist es, die aktive Kühleinrichtung so anzuordnen, dass sie bei abgestelltem, also unverkipptem fahrbaren Kühlbehältnis im Wesentlichen senkrecht über einer Rollenachse liegt.

Eine weitere bevorzugte Ausführungsform der Erfindung ist dadurch gekennzeichnet, dass die aktive Kühleinrichtung zwischen den beiden teleskopierbaren Führungselementen angeordnet ist. Auf diese Weise ist die aktive Kühleinrichtung vorteilhaft vor mechanischer Einwirkung und Beschädigung geschützt.

Zur Erzielung einer besonders guten Kühlung können die Tasche und/oder die Hülle wärmeisolierend ausgebildet sein. Man gewinnt durch diese Maßnahmen eine sehr gute Wärmeisolierung, wobei insbesondere auch eine Luftschicht zwischen Hülle und Tasche hierzu einen wesentlichen Beitrag leisten kann.

Besonders bevorzugt sind Ausgestaltungen der Erfindung, bei denen lediglich eine der Komponenten Tasche und Hülle wärmeisolierend ausgebildet ist. Das heißt, dass entweder eine sehr gut wärmeisolierende Innentasche in eine einfach aufgebaute Außentasche eingesetzt ist oder dass umgekehrt eine einfach aufgebaute, beispielsweise folienartige Innentasche in eine sehr gut wärmeisolierende Außentasche aufgenommen ist.

Weiterhin kann für den Einsatz des Thermobehälters auch vorgesehen sein, dass die Tasche oder Innentasche aus einem antibakteriell wirkenden Material gefertigt ist.

Um ein Austreten von Kondenswasser in die Hülle oder Außenhülle zu verhindern, ist die Tasche oder Innentasche bevorzugt aus wasserundurchlässigem Material, insbesondere aus einem Polyethylen- oder Polyvinylchlorid-Material, gefertigt.

Im oben beschriebenen Fall, dass eine wärmeisolierende Innentasche in eine nicht wärmeisolierende Außentasche aufgenommen ist, erhält man den Vorteil, dass auch sehr einfach aufgebaute, beispielsweise folienartige Außentaschen verwendet und somit Herstellungskosten gespart werden können. Insbesondere muss die Außentasche nicht wasser-, luft- oder wärmedicht ausgebildet sein, d.h., dass beispielsweise auch einfach genähte Außentaschen verwendet werden können.

Weiterhin kann auch die Außentasche oder Hülle zur Anpassung des Transportraums und damit des kühl zu haltenden Volumens aus einem flexiblen, insbesondere aus einem faltbaren Material gefertigt sein.

Bei einer zweckmäßigen Ausgestaltung des Thermobehälters ist eine Abdeckeinrichtung zum wahlweisen Verschließen des Durchbruchs vorhanden. Der Thermobehälter kann dann auch ohne eingesetzte Kühleinrichtung verwendet werden, was eine spürbare Gewichtsersparnis mit sich bringt. Bei wärmeisolierender Ausbildung der Hülle ist dann auch ein Einsatz des Thermobehälters als Kühltasche möglich, die bei geringeren Kühlanforderungen, etwa hinsichtlich Kühldauer oder Kühltemperatur, vollkommen ausreichend sein kann.

Die Verwendung des Thermobehälters beschränkt sich aber nicht auf den Einsatz als Kühltasche. Es können beispielsweise auch heiße Nahrungsmittel in dem Thermobehälter warmgehalten werden. Für den Fall, dass im wesentlichen eine Verwendung als Kühltasche zusammen mit einer eingesetzten Kühleinrichtung vorgesehen ist, kann die Hülle auch nicht wärmeisolierend ausgebildet sein. In diesem Fall kann die Hülle oder Außentasche dann auch separat als einfaches Transportbehältnis verwendet werden. Insgesamt kann die Funktionalität des Thermohälters durch die Abdeckeinrichtung deutlich gesteigert werden.

Eine weitere Verbesserung der Kühlung kann erzielt werden, wenn der Wärmefluss von der Außenwelt in den Transportraum reduziert wird. Eine Maßnahme, um dies zu erreichen, besteht darin, dass der Durchbruch zur formschlüssigen Aufnahme der Wärmetauscheinrichtung der Kühleinrichtung ausgebildet ist. In diesem Zusammenhang ist es weiterhin zweckdienlich, dass an einer Umrandung des Durchbruchs eine Abdichteinrichtung zur Wärmeisolierung vorhanden ist, wobei die Abdichteinrichtung als ein Wulst oder eine Mehrzahl von Wülsten aus einem elastischen Material ausgebildet sein kann.

Um einen sicheren Transport der in der Tasche gelagerten Nahrungsmittel und/oder Gegenstände zu gewährleisten, ist es vorteilhaft, wenn eine Befestigungseinrichtung zur Fixierung der Kühleinrichtung innerhalb des Transportraums vorhanden ist. Diese Befestigungseinrichtung kann ein Klettverschluss oder eine einrastende Verbindung sein.

Die Abdeckeinrichtung kann als eine mit der Hülle verbundene Klappe ausgebildet sein. Dadurch bleibt die Abdeckeinrichtung immer mit dem Thermobehälter verbunden und braucht nur weggeklappt zu werden, wenn eine Kühleinrichtung in den Transportraum eingesetzt wird. Soll der Thermobehälter ohne Kühleinrichtung benutzt werden, ist es von Vorteil, zur Fixierung der Klappe eine Verbindungseinrichtung vorzusehen. Diese kann wiederum als Klett- oder Reißverschluss oder als einrastende Verbindung ausgebildet sein.

Es kann auch von Vorteil sein, dass mehrere, insbesondere zwei Durchbrüche in der Außenhülle vorhanden sind. Es können dann beispielsweise zwei Kühleinrichtungen mit je einer Tasche in den Thermobehälter eingesetzt werden. In den beiden Taschen können dann unterschiedliche Kühltemperaturen erzeugt werden, beispielsweise Normalkühlung bei etwa 8 Grad C und Tiefkühlung bei Temperaturen unter dem Gefrierpunkt.

Zum Schutz der durch den Durchbruch nach außen durchragenden Wärmetauscheinrichtung der Kühleinrichtung sowie zum Schutz eines Benutzers kann außerdem zumindest ein Verkleidungselement vorhanden sein, welches die Wärmetauscheinrichtung wenigstens teilweise abdeckt.

Zur lösbaren Verbindung des Verkleidungselements mit der Hülle oder der Wärmetauscheinrichtung kann auch hier ein Klettverschluss oder eine einrastende Verbindung vorgesehen sein.

Eine bevorzugte Weiterbildung des erfindungsgemäßen Thermobehältnisses ist dadurch gekennzeichnet, dass die Hülle mehrwandig, insbesondere doppelwandig als Innenhülle und Außenhülle, ausgebildet ist. Durch eine doppelwandige Hülle kann mit geringem konstruktivem Aufwand eine deutlich verbesserte Wärmeisolierung und damit eine Energie- und Kostenersparnis erzielt werden.

Zweckmäßig ist dabei, wenn die Hülle, insbesondere die Innenhülle und/oder die Außenhülle wenigstens teilweise aus wärmeisolierendem Material gefertigt ist.

Bei einem Aufbau mit Innen- und Außenhülle kann weiterhin vorgesehen sein, dass die Innenhülle abtrennbar mit der Außenhülle verbunden ist. Die Innenhülle kann dann beispielsweise zum Reinigen aus der Außenhülle herausgenommen werden.

Dabei kann außerdem eine Befestigungseinrichtung zur lösbaren Befestigung der Innenhülle innerhalb des Transportraums mit der Außenhülle vorhanden sein, wobei die Befestigungseinrichtung vorteilhaft als mindestens ein Klettverschluß oder als mindestens eine einrastende Verbindung, beispielsweise eine Druckknopfverbindung, ausgebildet ist.

Weiterhin können auch für ein und dieselbe Außenhülle mehrere verschiedene Innenhüllen vorgesehen sein.

Eine wichtige Rolle für den Energieverbrauch spielt das effektiv zu kühlende Volumen. Zur variablen Anpassung dieses Volumens, d.h. des Volumens des Transportraumes kann die Hülle, insbesondere die Innenhülle und/oder die Außenhülle, wenigstens teilweise aus flexiblem, insbesondere faltbarem, Material gefertigt sein. Auf diese Weise wird jeweils nur das tatsächlich benötigte Volumen gekühlt und der Energieverbrauch kann dadurch reduziert werden.

Zur weiteren Verbesserung der Wärmeisolierung kann vorgesehen sein, dass die Hülle, insbesondere die Innenhülle und/oder die Außenhülle, auf einer Innenseite und/oder auf einer Außenseite mit einer wärmestrahlungsreflektierenden Schicht versehen ist. Die wärmestrahlungsreflektierende Schicht kann dabei als Metallbeschichtung und/oder als Metallfolie ausgebildet sein, wobei eine Metallfolie beispielsweise aufgeklebt oder auflaminiert sein kann. Auf diese Weise kann ein Eindringen von Wärmestrahlung in den Transportraum und damit dessen Erwärmung mit sehr einfachen Mitteln wirksam unterdrückt werden.

Die Innenhülle ist bevorzugt aus einem wasserundurchlässigen Material, insbesondere aus einem Polyethylen- oder PVC-Material gefertigt. Eine solche Innenhülle, die zweckmäßigerweise herausnehmbar ausgebildet ist, kann leicht gereinigt werden und verhindert außerdem in vorteilhafter Weise ein Verschmutzen der Außenhülle.

Für besondere Einsatzzwecke, beispielsweise für sterile gekühlte Transporte im medizinischen oder klinischen Bereich, kann auch vorgesehen sein, dass die Innenhülle aus einem antibakteriell wirkenden Material gefertigt und/oder mit einem antibakteriell wirkenden Stoff beschichtet ist.

Im Hinblick auf eine besonders effektive Kühlung des Transportraums ist es von Vorteil, wenn mindestens ein Teil der aktiven Kühleinrichtung, insbesondere eine Wärmetauscheinrichtung, durch die Öffnung in den Transportraum hineinragt. Darüber hinaus kann vorgesehen sein, dass die aktive Kühleinrichtung die Öffnung von innen und/oder von außen vollständig überdeckt. Dabei ist ein Aufbau bevorzugt, bei dem ein erster Teil einer aktiven Kühleinrichtung in ein in die Hülle hineingestanztes oder hineingeschnittenes Loch eingesteckt wird und anschließend auf der Innenseite der Hülle im Transportraum mit einer Wärmetauscheinrichtung verschraubt, vernietet oder in ähnlicher Weise verbunden wird. Auch ein umgekehrter Aufbau mit einer im Wesentlichen im Inneren des Transportraums angeordneten aktiven Kühleinrichtung und einer außen angeordneten Wärmetauscheinrichtung ist möglich. Weiterhin kann auch sowohl im Inneren des Transportraums als auch außen eine Wärmetauscheinrichtung vorgesehen sein.

Die aktive Kühleinrichtung kann als Peltier-Kühlelement ausgebildet sein, welches insbesondere für eine Versorgungsspannung von 12 Volt ausgelegt sein kann.

Dabei ist es zweckmäßig, wenn zur lösbaren Verbindung der aktiven Kühleinrichtung mit einer Spannungsversorgung, insbesondere zur Verbindung mit einer 12-Volt-Autobatterie eine Anschlusseinrichtung vorgesehen ist. Man erhält somit ein leicht von Hand transportierbares Kühlbehältnis, welches außerdem sehr bequem zur Vorkühlung oder weiteren Kühlung an eine Autobatterie angeschlossen werden kann. Ein solches Thermobehältnis ist hervorragend für den Einsatz im Freizeitbereich, beispielsweise zur Kühlung von Reiseproviant, geeignet.

Zur Unterbringung der Anschlusseinrichtung, bei der es sich insbesondere um ein Verbindungskabel mit einem daran angebrachten Verbindungsstecker handeln kann, ist es zweckmässig, wenn zwischen den teleskopierbaren Führungselementen ein Aufnahmeraum zur geschützten Aufnahme der Anschlusseinrichtung vorgesehen ist.

Zur Reduzierung des Energieverbrauchs für die Kühlung ist es zweckdienlich, das effektiv zu kühlende Volumen so gering wie möglich zu halten. Weiterhin ist es häufig erwünscht, im Transportraum untergebrachtes Transportgut zu fixieren und/oder eine komprimierte oder reduzierte Form des Transportraums dauerhaft zu stabilisieren. Zur Verkleinerung des Volumens der Hülle wird dabei bevorzugt eine Reduzierungs- oder Falteinrichtung vorgesehen, wobei es sich insbesondere um Kompressionsriemen handeln kann.

Wenn eine besonders genaue Einstellung einer Transporttemperatur im Transportraum gewünscht ist, kann auch eine Einrichtung zur Regelung der Temperatur im Transportraum vorgesehen sein. In diesem Zusammenhang muss außerdem betont werden, dass das erfindungsgemäße Transportbehältnis zwar vorwiegend als Kühlbehältnis verwendet wird, dass das Transportbehältnis aber auch zum temperierten Transport von Stoffen, Gegenständen und/oder Materialien bei Temperaturen, die höher als eine Umgebungstemperatur sind, geeignet ist.

Weitere Vorteile und Merkmale des erfindungsgemäßen Thermobehältnisses werden im Folgenden anhand von in der Zeichnung schematisch dargestellten Ausführungsbeispielen beschrieben.

In dieser Zeichnung zeigen:
- Fig. 1: eine perspektivische Teildarstellung eines Thermobehälters;
- Fig. 2: eine perspektivische Darstellung einer aktiven Kühleinrichtung mit einer Wärmetauscheinrichtung;
- Fig. 3: eine perspektivische Darstellung des Thermobehälters nach Figur 1, in welchen die Kühleinrichtung aus Figur 2 eingesetzt ist;
- Fig. 4: eine perspektivische Darstellung eines erfindungsgemäßen Thermobehältnisses in einem rollbereiten Zustand;
- Fig. 5: eine weitere perspektivische Ansicht des Thermobehältnisses aus Fig. 4 in einem abgestellten Zustand;
- Fig. 6: eine schematische Seitenansicht des Thermobehältnisses aus Fig. 4 mit ausgezogener Hülle sowie ausgezogenen Führungselementen einer Rolleinrichtung;
- Fig. 7: eine schematische Seitenansicht des Thermobehältnisses aus Fig. 6 bei zusammengefalteter Hülle und eingezogenen Führungselementen der Rolleinrichtung und
- Fig. 8: eine Teilansicht eines Schnitts entlang der Linie IV - IV in Figur 5.

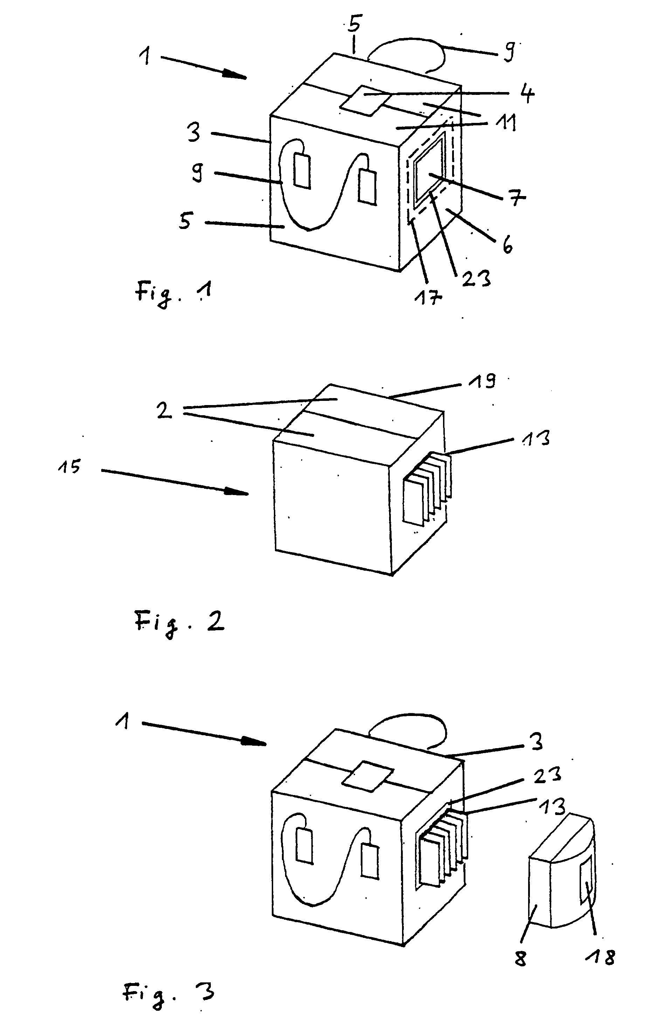

In Figur 1 ist in einer teilweisen Darstellung ein als Kühltasche 1 ausgebildeter Thermohälter gezeigt. Die Kühltasche 1 kann mit einer aus Übersichtlichkeitsgründen nicht dargestellten Rolleinrichtung lösbar verbunden werden. Die Kühltasche 1 weist eine Hülle 3 mit vier Seitenwänden 5, 6 einer Ober- und einer Unterseite auf. Zum Tragen der Kühltasche 1 sind zwei Halteschlaufen 9 an zwei sich gegenüberliegenden Seitenwänden 5 befestigt. Ein Zugriff auf einen innenliegenden Transportraum wird durch zwei an der Oberseite der Kühltasche 1 vorgesehene aufklappbare Deckel 11 ermöglicht. In einem in Figur 1 dargestellten zugeklappten Zustand sind die Deckel 11 mit einem Riegel 4 verschlossen. In einer weiteren Seitenwand 6 ist ein Durchbruch 7 eingearbeitet, der so geformt ist, dass eine Wärmetauscheinrichtung 13 einer aktiven Kühleinrichtung 15 (siehe Figur 2) formschlüssig aufgenommen werden kann. Zur weiteren Verbesserung der Wärmeisolierung befindet sich an einer Umrandung des Durchbruchs 7 eine Abdichteinrichtung 23 in Form eines Gummiwulstes. Weiterhin ist zur Abdeckung des Durchbruches 7 eine Abdeckeinrichtung 17 in Form einer mit der Außenhülle 3 beweglich verbundenen Klappe vorgesehen (in Figur 1 gestrichelt gezeichnet). Eine Fixierung der Klappe an der Hülle 3 über eine in der Zeichnung nicht dargestellte einrastende Verbindung möglich.

Figur 2 zeigt eine in die Kühltasche 1 aus Figur 1 einsetzbare aktive Kühleinrichtung 15. Die Kühleinrichtung 15 weist ein in der Zeichnung nicht dargestelltes aktives Kühlelement in Form eines Peltier-Elements sowie Kühlrippen als Wärmetauscheinrichtung 13 auf. Die Kühleinrichtung 15 ist darüber hinaus mit einer flexiblen, wärmeisolierenden Tasche 19 versehen, welche ein zu kühlende Volumen vollständig umschließt. Um einen Zugriff auf das im Inneren der Tasche 19 liegende zu kühlendes Volumen zu ermöglichen, sind zwei aufklappbare Deckelflügel 2 vorhanden, welche in Figur 2 in einem geschlossenen Zustand dargestellt sind.

Figur 3 zeigt die Kühltasche 1 nach Figur 1 mit einer in den Transportraum der Hülle 3 aufgenommenen Kühleinrichtung 15 nach Figur 2. Dabei ragen die als Wärmetauscheinrichtung 13 wirkenden Kühlrippen durch den Durchbruch 7 der Kühltasche 1 von innen nach außen und ermöglichen so eine definierte Wärmeleitung von innen nach außen. Die als Gummiwulst ausgebildete Abdichteinrichtung 23 sorgt dabei für eine sehr gute Wärmeisolierung zwischen Außenwelt und Transportraum. Zur Wärmeisolierung zwischen dem von der aktiven Kühleinrichtung 15 zu kühlenden Volumen und der Außenwelt tragen außerdem die wärmeisolierend ausgebildete Hülle 3, die wärmeisolierende Tasche 19 und darüber hinaus auch eine zwischen Hülle 3 und Tasche 19 liegende Luftschicht bei.

In Figur 3 ist außerdem ein Verkleidungselement 8 in einem abgenommenen Zustand dargestellt, welches zur teilweisen Abdeckung der Wärmetauscheinrichtung 13 über dieser angeordnet werden kann. Durch die Verwendung des Verkleidungselements 8 kann zum einen die Wärmetauscheinrichtung 13 vor Beschädigungen und zum anderen ein Benutzer vor Verletzungen geschützt werden. Ein Wärmeaustausch zwischen der Außenwelt und den Kühlrippen der Wärmetauscheinrichtung 13 wird bei aufgesetztem Verkleidungselement 8 durch eine in dem Verkleidungselement 8 vorgesehene Öffnung 18 ermöglicht. Über eine in der Zeichnung nicht dargestellte Klettverbindung kann das Verkleidungselement 8 an der Hülle 3 befestigt werden.

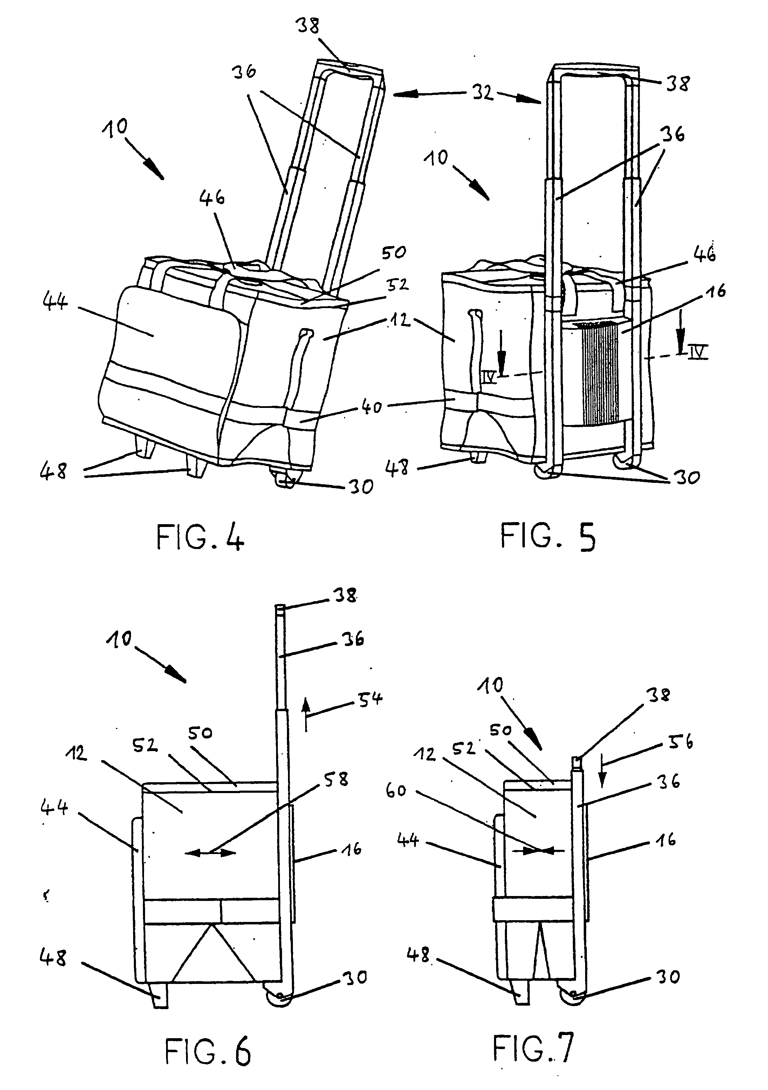

Figuren 4 und 5 zeigen in perspektivischen Ansichten ein erfindungsgemäßes Thermobehältnis 10, welches im Wesentlichen aus einer Hülle 12, einer aktiven Kühleinrichtung 16, sowie einer Fahreinrichtung aufgebaut ist. Die Fahreinrichtung ist als Rolleinrichtung ausgebildet mit zwei Rollen 30 und einer Führungseinrichtung 32, welche zwei teleskopierbare Führungselemente oder Führungsstangen 36 und einen Haltegriff 38 aufweist.

Die Figuren 4 und 5 zeigen die Führungseinrichtung 32 jeweils mit ausgezogenen Führungsstangen 36. Der Haltegriff 38 ist zwischen oberen Enden der beiden Führungsstangen 36 angebracht. Jeweils eine Rolle 30 ist an einem unteren Ende der Führungsstange 36 angebracht.

Zwischen den beiden Führungsstangen 36 ist auf einer Rückseite der Hülle 12 die aktive Kühleinrichtung 16 angeordnet. Durch die Führungsstangen 36, die bevorzugt aus Metall, insbesondere aus Aluminium gefertigt sind, ist die aktive Kühleinrichtung 16 vor mechanischer Einwirkung und Beschädigung geschützt. Bei der aktiven Kühleinrichtung 16 handelt es sich um ein Peltier-Kühlelement 16, welches mit einem (nicht dargestellten) Anschluss für eine 12 Volt-Autobatterie versehen ist.

Die Hülle 12, die im gezeigten Beispiel aus einem flexiblen, faltbaren Kunststoffmaterial gefertigt ist, weist zum Zugriff auf einen von der Hülle 12 umschlossenen Transportraum 14 (siehe Figur 4) eine verschließbare Zugriffsöffnung auf. In den in den Figuren dargestellten Situationen ist diese Zugriffsöffnung durch eine Deckelklappe 50 verschlossen, welche mit einem unteren Teil der Hülle 12 über einen schematisch gezeigten Reißverschluss 52 verbunden ist. An einer Oberseite der Hülle 12 sind zwei Trageschlaufen 46 zum manuellen Transport des Thermobehältnisses 10 angebracht. Diese Trageschlaufen 46 können beispielsweise verwendet werden, wenn ein Rollen oder Fahren des Thermobehältnisses 10 nicht möglich ist oder wenn die Hülle 12 von der Rolleinrichtung getrennt ist.

Auf einer Vorderseite der Hülle 12 ist eine zusätzliche Tasche 44 aufgebracht, deren Inneres von dem Peltier-Kühlelement 16 nicht gekühlt wird. In der Tasche 44 können demgemäß Gegenstände, die nicht gekühlt oder temperiert werden sollen, untergebracht werden, beispielsweise Besteck für ein Picknick. Weiterhin ist um einen Teilumfang der Hülle 12 ein Kompressionsriemen 40 angebracht, mit dessen Hilfe das zu kühlende Volumen den konkret bestehenden Erfordernissen angepasst und außerdem im Transportraum 14 befindliches Transportgut stabilisiert werden kann.

Figur 4 zeigt das Thermobehältnis 10 in einem fahrbereiten Zustand, bei dem das Thermobehältnis 10 leicht angekippt ist und den Boden lediglich durch die Rollen 30 berührt. In dieser Situation liegt der Schwerpunkt des Peltier-Kühlelements 16 auf einer Seite einer durch die Rollen 30 definierten Rollenachse und der Schwerpunkt eines im Transportraum untergebrachten Transportguts (welches hier nicht dargestellt ist) liegt auf einer gegenüberliegenden Seite der Rollenachse. Dadurch heben sich die durch die beiden Massen bewirkten Drehmomente um die Rollenachse teilweise auf und ein Nutzer muss zur Stabilhaltung des Thermobehältnisses 10 in der in Figur 4 gezeigten Stellung nur eine geringe Kraft aufwenden.

In Figur 5 ist das rollbare Thermobehältnis 10 in einem abgestellten Zustand gezeigt. Dabei steht das Thermobehältnis 10 auf den beiden Rollen 30 sowie auf zwei Füßen 48, welche auf der Unterseite der Hülle 12 gegenüberliegend den Rollen 30 angebracht sind.

In den Figuren 6 und 7 ist schematisch die Faltbarkeit der Hülle 12 und die Ein- und Ausziehbarkeit der Führungsstange 36 dargestellt. Es werden dabei dieselben Bezugszeichen wie in den Figuren 4 und 5 verwendet.

Figur 6 zeigt die Hülle 12 des Thermobehältnisses 10 in einem weitestmöglich auseinandergezogenen Zustand. Eine Bewegungsrichtung beim Auseinanderziehen der Hülle 12 ist mit einem Doppelpfeil 58 gekennzeichnet. Weiterhin sind bei dem in Figur 6 gezeigten Zustand die Führungsstangen 36 weitestmöglich herausgezogen, wobei eine Herausziehrichtung durch einen Pfeil 54 angedeutet ist.

In Figur 7 ist das Thermobehältnis 10 mit zusammengedrückter Hülle 12 und eingezogenen Führungsstangen 36 dargestellt. Die entsprechenden Bewegungsrichtungen sind wiederum durch einen Doppelpfeil 60 bzw. durch einen Pfeil 56 angedeutet. In diesem Zustand lässt sich das erfindungsgemäße Thermobehältnis 10 sehr raumsparend unterbringen und/oder transportieren.

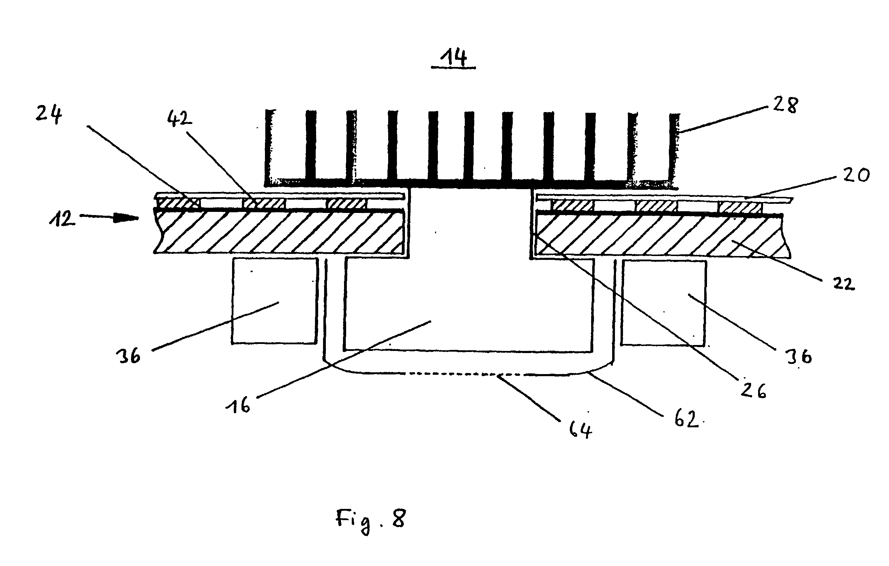

Figur 8 zeigt eine Teilschnittansicht längs der Linie IV-IV der Figur 5. Dargestellt ist ein doppelwandiger Aufbau der Hülle 12 und der Einbau des Peltier-Kühlelements 16, wobei wiederum dieselben Bezugszeichen wie in den Figuren 4 bis 7 verwendet werden.

Die Hülle 12 besteht im gezeigten Fall aus einer dünnen, flexiblen Innenhülle 20 und einer, ebenfalls flexiblen Außenhülle 22. Die Innenhülle 20 kann beispielsweise aus einem Polyethylen- oder PVC-Material und insbesondere auch aus einem transparenten Material gefertigt sein.

Die Außenhülle 22 ist aus einem im Vergleich zur Innenhülle 20 dickeren, wärmeisolierenden Material gefertigt und weist auf ihre Innenseite zur Reflektion von Wärmestrahlung eine Metallschicht 24 auf, bei der es sich auch um eine dünne Metallfolie handeln kann.

Innenhülle 20 und Außenhülle 22 sind z.B. durch mehrere Klettverschlüsse 42 trennbar miteinander verbunden, so dass die Innenhülle 20 beispielsweise zu Reinigungszwecken vollständig von der Außenhülle 22 getrennt werden kann.

In die Hülle 12, d.h. in Innenhülle 20 und Außenhülle 22 ist eine Öffnung 26 eingestanzt, hineingeschnitten oder in einer vergleichbaren Weise eingebracht, welche das Peltier-Kühlelement 16 zumindest teilweise aufnimmt. Die Öffnung 26 ist zur Kühlverbindung des Peltier-Kühlelements 16 in einen Transportraum 14 hinein ausgebildet, wobei die Öffnung 26 auf beiden Seiten von dem Peltier-Kühlelement 16 vollständig überdeckt wird. Auf der Seite des Transportraums 14 ist dabei eine Wärmetauscheinrichtung 28 angeordnet, welche mit einem auf einer Außenseite der Hülle 12 angeordneten Teil des Peltier-Kühlelements 16 verschraubt, vernietet oder in einer sonstigen geeigneten Weise verbunden ist.

Besonders deutlich ist in Figur 4 nochmals die Anordnung des Peltier-Kühlelements 16 zwischen den Führungsstangen 36 erkennbar, durch welche die Peltier-Kühleinrichtung 16 vor Beschädigung geschützt wird. Vorteilhafterweise ragt die Peltier-Kühleinrichtung 16 nicht über die Stärke der Führungsstangen 36 hinaus.

Ein weiterer Beschädigungsschutz ist für das Peltier-Kühlelement 16 außerdem durch eine Schutzabdeckung 62 gegeben, welche auf der Außenseite der Hülle 12 über das Peltier-Kühlelement 16 gestülpt ist. Diese Schutzabdeckung, die beispielsweise aus Hartplastik oder aus Metall gefertigt sein kann, ist zur Gewährleistung eines ausreichenden Wärmeaustausches mit der Umwelt mit einer Vielzahl von Schlitzen 64 versehen.

## Patentansprüche

1. Thermobehältnis, insbesondere Kühltasche (1), für Kühltransporte von Nahrungsmitteln, Stoffen und/oder Gegenständen,
- mit einer Hülle (3), die einen Transportraum umgibt,
- mit einer verschließbaren Öffnung in der Hülle (3) zum Zugriff auf den Transportraum und
- mit einer manuell betätigbaren Fahreinrichtung, die mit der Hülle gekoppelt ist,
**dadurch gekennzeichnet,**
- **dass** in der Hülle (3) mindestens ein Durchbruch (7) für die Aufnahme einer Wärmetauscheinrichtung (13) einer aktiven Kühleinrichtung ausgebildet ist,
- **dass** mindestens eine aktive Kühleinrichtung (16) vorgesehen ist mit einem aktiven Kühlelement und einer Wärmetauscheinrichtung (13), die in dem Durchbruch aufgenommen ist, und
- **dass** die Hülle (3) zur Anpassung des Volumens des Transportraums aus einem flexiblen, insbesondere aus einem faltbaren, Material gefertigt ist.

2. Thermobehältnis nach Anspruch 1,
**dadurch gekennzeichnet,**
**dass** die Kühleinrichtung (15) eine Tasche (19) zur Aufnahme von Nahrungsmitteln, Stoffen und/oder Gegenständen aufweist.

3. Thermobehältnis nach einem der Ansprüche 1 oder 2,
**dadurch gekennzeichnet,**
**dass** die Hülle (12) lösbar mit der Fahreinrichtung gekoppelt ist.

4. Thermobehältnis nach einem der Ansprüche 1 bis 3,
**dadurch gekennzeichnet,**
**dass** die Fahreinrichtung als Rolleinrichtung mit mindestens zwei Rollen (30) und einer Führungseinrichtung (32) ausgebildet ist.

5. Thermobehältnis nach Anspruch 4,
**dadurch gekennzeichnet,**
**dass** die Führungseinrichtung (32) zwei teleskopierbare Führungselemente (36), insbesondere aus Metall, und einen damit verbundenen Haltegriff (38) aufweist.

6. Thermobehältnis nach einem der Ansprüche 1 bis 5,
**dadurch gekennzeichnet,**
**dass** die aktive Kühleinrichtung (16) so angeordnet ist, dass sie sich im manuellen Rollbetrieb auf einer einem Schwerpunkt eines Transportguts gegenüberliegenden Seite einer Rollenachse (34) befindet und insbesondere zwischen den beiden Führungselementen (36) angeordnet ist.

7. Thermobehältnis nach einem der Ansprüche 1 bis 6,
**dadurch gekenzeichnet**,
dass die Tasche (19) und/oder die Hülle (3) wärmeisolierend ausgebildet ist.

8. Thermobehältnis nach einem der Ansprüche 1 bis 7,
**dadurch gekennzeichnet,**
**dass** der Durchbruch (7) zur formschlüssigen Aufnahme der Wärmetauscheinrichtung (13) der Kühleinrichtung (15) ausgebildet ist.

9. Thermobehältnis nach Anspruch 8,
**dadurch gekennzeichnet,**
**dass** an einer Umrandung des Durchbruchs (7) ein Wulst oder eine Mehrzahl von Wülsten aus einem elastischen Material als Abdichteinrichtung (23) zur Wärmeisolierung vorhanden ist.

10. Thermobehältnis nach einem der Ansprüche 1 bis 9,
**dadurch gekennzeichnet,**
**dass** die Hülle (3) als Trage- oder Umhängetasche, als Rucksack, als Sattel- oder Lenkertasche für Fahrräder oder als Motorradbox ausgebildet ist.

11. Thermobehältnis nach einem der Ansprüche 1 bis 10,
**dadurch gekennzeichnet,**
**dass** die Hülle (12) mehrwandig, insbesondere doppelwandig als Innenhülle (20) und Außenhülle (22), ausgebildet ist.

12. Thermobehältnis nach einem der Ansprüche 1 bis 11,
**dadurch gekennzeichnet,**
**dass** die Hülle (12), insbesondere die Innenhülle (20) und/oder die Außenhülle (22), auf einer Innenseite und/oder auf einer Außenseite mit einer Metallbeschichtung und/oder mit einer Metallfolie als einer wärmestrahlungsreflektierenden Schicht (24) versehen ist.

13. Thermobehältnis nach einem der Ansprüche 1 bis 12,
**dadurch gekennzeichnet,**
**dass** die aktive Kühleinrichtung (16) als Peltier-Kühlelement ausgebildet ist, welches inbesondere für eine Versorgungsspannung von 12 Volt ausgelegt ist und dass zur lösbaren Verbindung der aktiven Kühleinrichtung (16) mit einer Spannungsversorgung, insbesondere zur Verbindung mit einer 12-Volt-Autobatterie, eine Anschlusseinrichtung vorgesehen ist.

14. Thermobehältnis nach einem der Ansprüche 1 bis 13,
**dadurch gekennzeichnet,**
**dass** zur Verkleinerung eines Volumens der Hülle (12) eine Reduzierungs- oder Falteinrichtung, insbesondere Kompressionsriemen (40), vorgesehen sind.

15. Thermobehältnis nach einem der Ansprüche 1 bis 14,
**dadurch gekennzeichnet,**
**dass** eine Einrichtung zur Regelung der Temperatur im Transportraum (14) vorgesehen ist.

## Claims

1. Thermal container, particularly a cooler bag (1), for the refrigerated transportation of food, substances and/or articles,
- having a jacket (3) surrounding a transportation space,
- a closable opening being provided in the jacket (3) for accessing the transportation space and
- a manually operable driving device coupled to the jacket,
**characterized in that**
- at least one recess (7) is provided in the jacket (3), the recess (7) being constructed for the reception of a heat exchange device (13) of an active cooling device,
- that at least one cooling device (16) being provided, with an active cooling element and a heat exchange device (13) being recepted in the recess, and
- that for adjusting the volume of the transportation space the jacket (3) is made from a flexible, particularly foldable material.

2. Thermal container according to claim 1,
**characterized in that**
the cooling device (15) has a bag (19) for receiving food, substances and/or articles.

3. Thermal container according to claim 1 or 2,
**characterized in that**
the jacket (12) is detachably coupled to the driving device.

4. Thermal container according to one of claims 1 to 3,
**characterized in that**
the driving device is constructed as a rolling device with at least two rolls (30) and a guide device (32).

5. Thermal container according to claim 4,
**characterized in that**
the guide device (32) has two telescopable guide elements (36), particularly made of metal, and a handle (38) connected thereto.

6. Thermal container according to one of claims 1 to 5,
**characterized in that**
the active cooling device (16) is arranged in such a way that, during manual rolling operation, it is on a side of a rolling axis (34) opposite to a center of gravity of a transport article, and
is particularly arranged between the two guide elements (36).

7. Thermal container according to one of claims 1 to 6,
**characterized in that**
the bag (19) and/or the jacket (3) is constructed thermally insulating.

8. Thermal container according to one of claims 1 to 7,
**characterized in that**
the recess (7) is constructed for the form-fit reception of the heat exchange device (13) of the cooling device (15).

9. Thermal container according to claim 8,
**characterized in that**
on a border of the recess (7) is provided a bead or a plurality of beads made of an elastic material as a sealing device (23) for thermal insulation.

10. Thermal container according to one of claims 1 to 9,
**characterized in that**
the jacket (3) is constructed as a carrying or shoulder strap bag, as a rucksack, as a saddle or handlebar bag for bicycles or as a motorcycle box.

11. Thermal container according to one of claims 1 to 10,
**characterized in that**
the jacket (12) has a multiple-wall, particularly a two-wall construction in the form of an inner jacket (20) and an outer jacket (22).

12. Thermal container according to one of claims 1 to 11,
**characterized in that**
the jacket (12), particularly the inner jacket (20) and/or the outer jacket (22), is provided on an inner side and/or an outer side with a metal coating and/or a metal foil as a thermal radiation-reflecting coating (24).

13. Thermal container according to one of claims 1 to 12,
**characterized in that**
the active cooling device (16) is constructed as a Peltier cooling element, which particularly designed for a supply voltage of 12 V and that for the detachable connection of the active cooling device (16) to a power supply, particularly for the connection to a 12 V car battery, a connecting device is provided.

14. Thermal container according to one of claims 1 to 13,
**characterized in that**
for reducing volume of the jacket (12) a reducing or folding device, particularly compression straps (40) are provided.

15. Thermal container according to one of claims 1 to 14,
**characterized in that**
a device for regulating the temperature in the transportation space (14) is provided.

## Revendications

1. Conteneur thermique, en particulier poche réfrigérante (1), pour le transport frigorifique d'aliments, substances et/ou objets,
- avec une enveloppe (3) qui entoure un compartiment de transport,
- avec une ouverture refermable dans l'enveloppe (3) pour accéder au compartiment de transport, et
- avec un dispositif de conduite opérable manuellement, qui est couplé à l'enveloppe,
***caractérisé***
- ***en ce qu***'au moins une traversée (7) est formée dans l'enveloppe (3) pour recevoir un dispositif échangeur de chaleur (13) d'un dispositif frigorifique actif,
- ***en ce qu*****'**au moins un dispositif frigorifique actif (16) est prévu, avec un élément réfrigérant actif et un dispositif échangeur de chaleur (13) qui est logé dans la traversée, et
- ***en ce qu***'en vue d'une adaptation du volume de compartiment de transport, l'enveloppe (3) est fabriquée dans un matériau flexible, en particulier pliable.

2. Conteneur thermique selon la revendication 1,
***caractérisé en ce que***
le dispositif frigorifique (15) comprend une poche (19) pour recevoir des aliments, substances et/ou objets.

3. Conteneur thermique selon l'une quelconque des revendications 1 ou 2,
***caractérisé en ce que*** l'enveloppe (12) est couplée de manière amovible au dispositif de conduite.

4. Conteneur thermique selon l'une quelconque des revendications 1 à 3,
***caractérisé en ce que***
le dispositif de conduite est conformé en dispositif de roulement avec au moins deux roulettes (30) et un dispositif de guidage (32).

5. Conteneur thermique selon la revendication 4,
***caractérisé en ce que***
le dispositif de guidage (32) comprend deux éléments de guidage télescopiques (36), en particulier en métal, et une poignée de maintien (38) reliée à eux.

6. Conteneur thermique selon l'une quelconque des revendications 1 à 5,
***caractérisé en ce que***
le dispositif frigorifique actif (16) est placé de telle manière qu'en régime de roulement manuel, il se trouve d'un côté d'un axe (34) de roulette opposé à un centre de gravité d'un produit à transporter, et est placé en particulier entre les deux éléments de guidage (36).

7. Conteneur thermique selon l'une quelconque des revendications 1 à 6,
***caractérisé en ce que***
la poche (19) et/ou l'enveloppe (3) est/sont réalisée(s) isolante(s) thermique(s).

8. Conteneur thermique selon l'une quelconque des revendications 1 à 7,
***caractérisé en ce que***
la traversée (7) est conformée de manière à recevoir par engagement positif le dispositif (13) d'échange de chaleur du dispositif frigorifique (15).

9. Conteneur thermique selon la revendication 8,
***caractérisé en ce qu'***
un bourrelet ou une pluralité de bourrelets en matière élastique est/sont présent(s) sur une bordure de la traversée (7) en tant que dispositif d'étanchéité (23) pour réaliser l'isolation thermique.

10. Conteneur thermique selon l'une quelconque des revendications 1 à 9,
***caractérisé en ce que*** l'enveloppe (3) est conformée en sac à main ou en sacoche, en sac à dos, sac de selle ou sac de guidon pour des bicyclettes ou en coffre pour motocyclette.

11. Conteneur thermique selon l'une quelconque des revendications 1 à 10,
***caractérisé en ce que***
l'enveloppe (12) est réalisée en plusieurs parois, en particulier en deux parois servant d'enveloppe intérieure (20) et d'enveloppe extérieure (22).

12. Conteneur thermique selon l'une quelconque des revendications 1 à 11,
***caractérisé en ce que***
l'enveloppe (12), en particulier l'enveloppe intérieure (20) et/ou l'enveloppe extérieure (22), est munie, sur une face intérieure et/ou une face extérieure, d'un revêtement métallique et/ou d'une feuille métallique servant de couche (24) réfléchissant le rayonnement thermique.

13. Conteneur thermique selon l'une quelconque des revendications 1 à 12,
***caractérisé en ce que***
le dispositif frigorifique actif (16) est conformé en élément à effet Peltier, qui est conçu en particulier pour une tension d'alimentation de 12 volts, et ***en ce que*** pour la liaison amovible entre le dispositif frigorifique actif (16) et une tension d'alimentation, en particulier pour la liaison avec une batterie de voiture de 12 volts, il est prévu un dispositif de raccordement.

14. Conteneur thermique selon l'une quelconque des revendications 1 à 13,
***caractérisé en ce qu'***
afin de réduire un volume de l'enveloppe (12), il est prévu un dispositif de réduction ou de pliage, en particulier des courroies de compression (40).

15. Conteneur thermique selon l'une quelconque des revendications 1 à 14,
***caractérisé en ce qu'***
un dispositif de régulation de la température est prévu dans le compartiment de transport (14).
